# EUROPEAN PATENT APPLICATION

(11) **EP 4 741 046 A1**
(43) Date of publication of application: **13.05.2026**
(21) Application number: 25213678.3
(22) Date of filing: 05.11.2025
(51) Int. Cl.: B01D 65/00

(54) **SUPPORT DEVICE FOR USE WITH A MEMBRANE FILTRATION APPARATUS**

(30) Priority: 12.11.2024 EP 24212321
(71) Applicant: Tetra Laval Holdings & Finance S.A., 1009 Pully (CH)
(72) Inventor: Neubert, Lars, DK-8270 Højbjerg (DK)
(74) Representative: Tetra Pak Patent Attorneys

(57) **Abstract**

A support device (20) for use with a membrane filtration apparatus that includes an elongate membrane housing (11). The device facilitates loading and/or unloading of a membrane element (12) through an opening (11C) in an end portion (11A) of the housing (11). It comprises an end flange portion (28) abutting the end portion (11A) and a platform portion (22) projecting from the end flange portion (28) to support the membrane element (12). The device further includes an engagement portion (21) with a first clamp part (26) fixedly connected to the end flange portion (28) and a second clamp part (29) that clamps against a lower side (11H) of the membrane housing (11). The first clamp part (26) includes an adjustment element (37) configured to adjust the vertical position of a support surface (24) relative to the opening (11C) in the membrane housing (11).

## Description

### Technical Field

The invention relates to the field of membrane filtration, specifically to the assembly of a support device for a membrane filtration apparatus, particularly, but not exclusively, for use in manufacturing food products, such as dairy items and beverages.

### Background

Membrane filtration is widely employed in process manufacturing, involving the physical separation of an incoming feed into two fractions via a membrane. The fraction that passes through the membrane is typically referred to as "permeate," while the remaining fraction is known as "retentate." Depending on the application, one or both fractions may be utilized in the production of various products.

A membrane filtration apparatus generally comprises one or more filtration units, each designed to separate an incoming feed into permeate and retentate. Each unit includes one or more membrane elements housed in a containment structure. Commonly used membrane elements include hollow-fiber and spiral-wound types, often configured for installation in elongate, tubular housings in industrial applications.

In industrial settings, periodic service and maintenance are essential to ensure consistent product quality and maximize equipment availability. For ease of service, these tubular housings may feature an end opening sealed with a removable end cap. By removing the end cap, the membrane elements within the filtration unit are accessible and can be extracted through the end opening for inspection, cleaning, or replacement. Reassembly involves reinserting the membrane elements into the housing and reattaching the end cap to cover the end opening.

If the tubular housings are positioned horizontally, disassembly and reassembly are usually conducted manually. However, filtration units can be large, and membrane elements relatively heavy, making manual handling challenging for service personnel. Additionally, a filtration unit often contains multiple membrane elements that must be carefully aligned when loaded into the housing, often using an interconnector, also known as an anti-telescopic device (ATD), seal carrier, membrane end cap, or membrane coupler. Consequently, reassembling a filtration unit is often labor-intensive and time-consuming, frequently requiring at least two people. Despite careful handling, there is still a risk of misalignment between membrane elements, which can lead to leakage-a particularly undesirable and potentially severe issue in the production of consumable products such as food.

Manual handling of heavy objects also increases the risk of musculoskeletal injuries, especially if the weight of the membrane element exceeds recommended limits for manual handling and/or if it is lifted in a position that places excessive strain on the musculoskeletal system. Limited access to the membrane elements may necessitate working at heights, further raising the risk of injuries when combined with heavy weights and potentially awkward lifting postures.

Additionally, accidental dropping of membrane elements during removal can cause irreparable damage to the membrane element and/or the interconnector.

Patent documents JP2013052316, JP2013052317, and JP2013052318 attempt to address these challenges by providing a free-standing support structure with a movable platform for holding membrane elements. The support structure can be positioned in front of a set of filtration units, and the motorized platform allows operators to align a membrane element with the end opening of the housing. The platform also includes a movable rod that, when connected to a membrane element, facilitates moving the membrane element in and out of the housing. While this prior art addresses several of the issues mentioned above, the free-standing support structure is bulky, heavy, and requires considerable space in front of the filtration unit. Furthermore, it is a complex device with multiple drive units enabling movement in the x, y, and z directions, likely resulting in high acquisition and maintenance costs.

### Summary

It is an objective of the invention to at least partly overcome one or more limitations of the prior art. One objective is to provide a user-friendly, simple, and cost-effective technique for assembling a filtration unit in a membrane filtration apparatus. These objectives, along with additional objectives that may arise from the following description, are at least partly achieved by a support device and a method of assembling a filtration unit as outlined in the independent claims, with embodiments defined by the dependent claims.

According to one aspect of the invention, the support device is designed for use with a membrane filtration apparatus comprising an elongate membrane housing. The support device is configured to support a membrane element during the loading and/or unloading of the membrane element through an opening in an end portion of the membrane housing. The support device comprises an end flange portion configured to abut the end portion of the membrane housing, a platform portion that projects from the end flange portion to support the membrane element during loading and/or unloading, and an engagement portion with a first clamp part and a second clamp part. The first clamp part is fixedly connected to the end flange portion and arranged to hook onto the upper side of the end portion of the membrane housing, while the second clamp part is movably connected to the engagement portion and arranged to clamp against the lower side of the end portion of the membrane housing. The first clamp part includes an adjustment element configured to cooperate with the upper side of the end portion of the membrane housing to adjust the vertical position of a support surface relative to the opening.

The described support device is a simple and cost-effective tool that can be conveniently attached to the end portion of a membrane housing, providing support for membrane elements during loading and/or unloading through an opening in this end portion. Being detachable, the support device can be easily moved between membrane housings by service personnel, facilitating loading and unloading of membrane elements regardless of available floor space in front of the housings. It is relatively lightweight and economical, requiring no electric drive units or similar mechanisms. Instead, by engaging with the end portion, the support device is inherently aligned with the opening, aiding in the loading and unloading process.

By design, the support device enables manual loading and/or unloading of one or more membrane elements into a membrane housing, potentially by a single person, provided they can lift the membrane element onto the support device. With a suitably designed platform portion, the device allows for the precise alignment of two consecutive membrane elements on the platform during loading, reducing stress on the interconnector and minimizing leakage risk. Additionally, the support device lowers the risk of injuries and decreases the chance of a membrane element being dropped.

Embodiments of this aspect are detailed in the description. These embodiments may yield the described technical benefits, as well as additional advantages such as balancing weight and strength, improving usability and versatility, and enhancing user safety.

According to another aspect, the adjustment element is arranged at a central top portion of the first clamp part, defined as the upper surface of the first clamp part. The adjustment element is configured to adjust the vertical position of the support device relative to the membrane housing (MH). To enable precise vertical adjustment and minimize the risk of lateral movement during adjustment, the adjustment element operates vertically from the central top portion of the first clamp part.

In another aspect, the adjustment element is movable relative to the first clamp part, allowing a membrane housing abutment surface on the adjustment element to move relative to the first clamp part. This abutment surface, located on the underside of the tip of the adjustment element, is configured to contact a radial protrusion on the end portion of the membrane housing.

In yet another aspect, the adjustment element is a threaded screw extending through a threaded opening in the first clamp part, with the head of the screw on the outside and the tip of the screw on the inside of the first clamp part. The threaded opening is positioned in the first clamp part between the middle section of the waist and the outer flange, ensuring that the screw is vertically aligned above the radial protrusion when the support device is connected to the membrane housing.

In another aspect, the first clamp part is welded to an upper surface of the end section of the support device. This weld connection may include multiple weld points to secure the first clamp part to the support device. When vertically adjusting the support device by manipulating the adjustment element, it is the first clamp part that moves vertically relative to the radial protrusion of the membrane housing. To ensure synchronized vertical movement, the first clamp part and the support device must be fixedly connected.

According to another aspect, the first clamp part includes a first inclined engagement surface arranged to abut a second inclined engagement surface on the upper side of the end portion of the membrane housing. The first inclined engagement surface is positioned on the outer flange of the first clamp part and is configured to face the second inclined engagement surface of the radial protrusion. The first clamp part, with its outer flange, acts as a "hook" element that embraces the radial protrusion, causing the second inclined engagement surface to engage with the first inclined engagement surface. In this position, where the first clamp part embraces the radial protrusion, horizontal movements of the support device are restricted.

According to one aspect, the inclined engagement surface has a semi-circular extension around the end flange portion. This semi-circular extension may be located on the upper half of the end flange portion. When the support device is connected to the membrane housing (MH), the device, via the first clamp part, will hang on the radial protrusion of the MH. In this position, primarily the semi-circular extension of the first inclined engagement surface on the upper half will engage with the second inclined engagement surface.

In one aspect, the inclined engagement surface is parallel to the second inclined engagement surface. Since the two inclined engagement surfaces are parallel, a broad contact area is created when they engage, contributing to a stable and secure connection between the support device and the MH.

According to another aspect, the inclined engagement surface extends from the inside of the first clamp part to an edge surface of the outer flange of the first clamp part, which is configured to face the upper side of the end portion. This extension is shorter than that of the second inclined engagement surface, which extends from the outer surface of the radial protrusion to the upper side of the end portion. The outer surface of the radial protrusion is parallel to an imaginary center axis through the support device and is configured to abut the tip of the adjustment element. The shorter length of the first inclined engagement surface allows the first and second clamp parts to achieve a better fit against the radial protrusion and the end portion of the MH. Conversely, if the first inclined engagement surface were longer than the second inclined engagement surface, the edge surface of the outer flange would abut the upper side of the end portion, preventing the engagement portion (comprising the first and second clamp parts) from tightening around the end portion of the MH, thereby failing to achieve a secure fit.

According to another aspect, the end flange portion includes an abutment surface configured to face and abut the end portion of the membrane housing. With respect to an imaginary center axis running through a cylindrical end section of the support device, the end section is equipped with an abutment surface oriented to face the MH when the support device is connected to it. The abutment surface is vertical and may have a circular extension around the center axis. This abutment surface enables a membrane element (ME) to be pushed from the support device into the MH.

In one aspect, the engagement portion includes at least one guiding pin extending from the abutment surface, configured to protrude into a slot in the end portion of the membrane housing when the end flange portion abuts the end portion of the housing. During assembly of the support device onto the MH, the guiding pin ensures proper rotational alignment of the support device relative to the MH and the adjustment element. To achieve correct vertical alignment, it is essential that the support device is rotationally positioned so that the adjustment element is centrally and vertically aligned with the central top portion of the second clamp part.

According to another aspect, the end flange portion includes a first and a second guiding pin extending from the abutment surface. These guiding pins are located in the lower half of the end flange portion and spaced apart by at least one-quarter of the circumference of the lower half. Having two guiding pins allows quicker assembly by facilitating the correct rotational alignment of the support device. Additionally, the support device functions as a reusable tool for assembly with the MH. This repeated use may cause wear on the support device and guiding pins. If one guiding pin becomes worn or broken, the device may still be operable as long as the remaining guiding pin is functional.

In one aspect, the guiding pin is inserted through a pin hole extending through the end flange portion, with the pin hole parallel to an imaginary center axis through the end section. As the pin hole extends fully through the end flange portion, during assembly or replacement, a guiding pin only needs to be pushed into the pin hole until its top extends from the abutment surface. Any remnants or debris from a previous guiding pin will be pushed out through the abutment surface as a new guiding pin is inserted.

According to one aspect, the engagement portion includes an articulated joint connecting the first ends of the first and second clamp parts, as well as a tensioning device positioned opposite the articulated joint, to connect the second ends of the first and second clamp parts and secure them onto the end portion of the membrane housing. Because the second clamp part is pivotably connected to the first clamp part via the articulated joint, connecting and securing the second ends with the tensioning device becomes a quick and simple process.

According to another aspect, the invention relates to a method for assembling a support device, as described in the above aspects, onto an elongate membrane housing. The method includes the following steps: positioning a support device against a membrane housing; arranging a first clamp part against a radial protrusion of the membrane housing; inserting first and second guiding pins in the end flange portion of the support device into respective receiving recesses in the end portion of the membrane housing; positioning a second clamp part against the radial protrusion; connecting the second clamp part to the first clamp part; adjusting the vertical position of the support device relative to the elongate membrane housing.

This method allows a single person to assemble the support device onto the MH and replace MEs in the membrane filtration apparatus.

Additional objectives, features, embodiments, aspects, and advantages of the invention may be apparent from the following detailed description and drawings.

### Drawings

Embodiments of the invention are described below by way of example with reference to the accompanying schematic drawings.
FIG. 1 is an elevated side view of a membrane filtration apparatus.
FIG. 2 is an elevated side view of a support device mounted onto a housing and used for loading a membrane element.
FIG. 3 is a cross-sectional view of a part of a support device and an MH connected to each other.
FIG. 4 is a cross-sectional view of a first clamp part connecting an end section and an end portion to each other.
FIG. 5 is a cross-sectional view of the lower half of a connection between an end section and an end portion.
FIG. 6 is an enlarged cross-sectional view of the connection between the end section and the end portion, as illustrated in FIG. 5.
FIG. 7 is a perspective view of a support device comprising a first and second clamp part disconnected from each other.
FIG. 8 is a perspective view of a support device comprising a first and second clamp part connected to each other.
FIG. 9 is a flowchart of a method for connecting a support device to an MH.

### Description

Embodiments of the present invention will now be described more fully hereinafter with reference to the accompanying drawings, in which some, but not all, embodiments of the invention are shown. Indeed, the invention may be embodied in many different forms and should not be construed as limited to the embodiments set forth herein; rather, these embodiments are provided so that this disclosure may satisfy applicable legal requirements.

It will also be understood that, where possible, any of the advantages, features, functions, devices, and/or operational aspects of any of the embodiments of the present invention described and/or contemplated herein may be included in any of the other embodiments of the present invention described and/or contemplated herein, and/or vice versa. In addition, where possible, any terms expressed in the singular form herein are meant to also include the plural form and/or vice versa, unless explicitly stated otherwise. As used herein, "at least one" shall mean "one or more," and these phrases are intended to be interchangeable. Accordingly, the terms "a" and/or "an" shall mean "at least one" or "one or more," even though the phrase "one or more" or "at least one" is also used herein. As used herein, the term "and/or" includes any and all combinations of one or more of the associated listed items.

Well-known functions or constructions may not be described in detail for brevity and/or clarity. Unless otherwise defined, all terms (including technical and scientific terms) used herein have the same meaning as commonly understood by one of ordinary skill in the art to which this invention belongs. Like reference signs refer to like elements throughout.

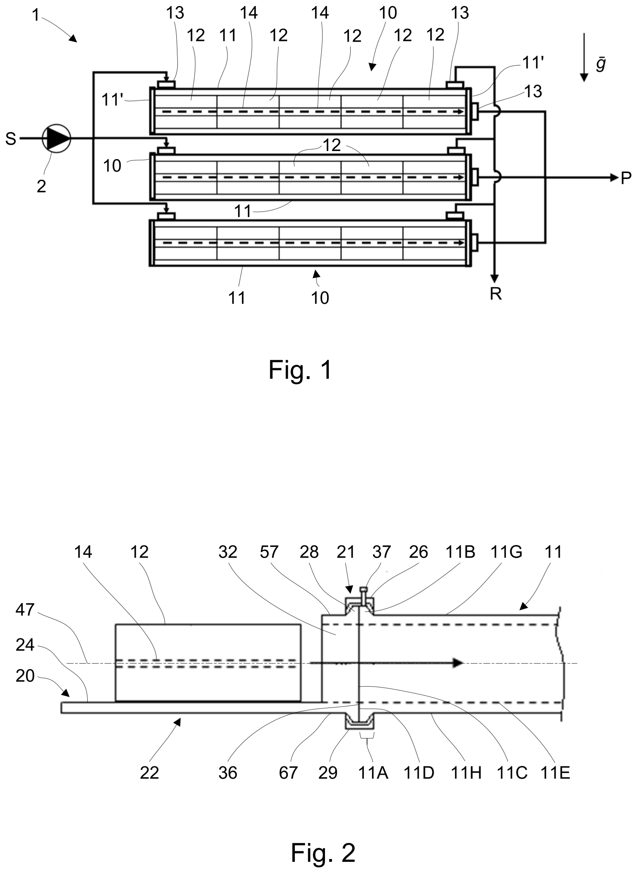

Embodiments of the present invention relate to the assembly and disassembly of filtration units in a membrane filtration apparatus. FIG. 1 shows an example of a membrane filtration apparatus 1, which comprises three horizontal filtration units 10 arranged in a vertical stack (as indicated by the direction of gravity g̅). For illustration purposes, some internal parts of the filtration units 10 are shown in FIG. 1. Each filtration unit 10 comprises an elongate tubular vessel or "membrane housing" 11, which is arranged with its center axis in a horizontal plane. The membrane housing 11 is abbreviated as "MH" in the following. A set of membrane elements 12 (five in FIG. 1) are arranged inside the MH 11. The membrane element 12, also known as a "membrane filter" or "membrane module," is abbreviated as "ME" in the following. Each ME 12 defines an internal permeate channel 14 for permeate fluid, and the MEs 12 are arranged inside the MH 11 with their permeate channels 14 in mutual alignment.

The MEs 12 are filtration elements and may be of any suitable type, including but not limited to spiral-wound and hollow-fiber types, which are well-known in the art. Generally, although not shown in FIG. 1, the MEs 12 are fitted together in pairs by a respective connecting element, referred to as an "interconnector" in the Background section and abbreviated as "IC" in the following. This ensures mutual alignment and interconnection of the permeate channels 14 of adjacent MEs 12, forming a composite permeate channel that extends along the filtration unit 10. For spiral-wound MEs, it is common practice for ICs to also be designed to protect the respective ME 12 from telescoping due to hydraulic forces pushing on the MEs 12. Conventionally, such an IC may be configured as a spoke wheel with a central hub that defines a permeate channel.

The ends of the respective MH 11 are covered by end caps 11'. Ports 13 are defined in the respective MH 11 and in at least one of the end caps 11' for connection to fluid lines, pipes, or hoses. It is realized that FIG. 1 is highly schematic and that further conventional components may be included, such as gaskets, spacer tubes, blind adapters, support rings, retaining rings, etc.

In the example of FIG. 1, the filtration units 10 are connected to a supply manifold of supply pipes. A supply pump 2 in the supply manifold is operable to supply a stream of a liquid substance S through ports 13 on the inlet ends ("feed ends") of the filtration units 10. Pumping the liquid substance S across the surface of the MEs 12 creates a positive trans-membrane pressure that forces any components smaller than the porosity of the MEs 12 to pass through, forming a permeate (or filtrate) P, which is collected in the composite permeate channel as indicated by dashed arrows in FIG. 1. A permeate manifold is connected to ports 13 in the end caps 11' on the outlet ends of the MHs 11 to receive the permeate P. The remaining fluid forms a retentate (or concentrate) R. A retentate manifold is connected to ports 13 on the outlet ends of the MH 11 to receive the retentate R.

FIG. 2 is a side view of an example support device or support fixture 20, which is mounted onto an end portion 11A of an MH 11, either at the feed end or the outlet end. In the illustrated example, the MH 11 comprises a radial protrusion 11B, which may or may not extend around the full perimeter of the MH. In this context, "radial" refers to a direction perpendicular to the elongate extent or axial direction of the MH 11. An opening 11C is defined in the end portion 11A. The support device 20 is configured to support an ME 12 during assembly/disassembly of the filtration unit 10, particularly during loading and/or unloading of the ME 12 through the opening 11C. The dashed lines inside the MH 11 indicate the extent of the internal wall that defines the cavity within the MH 11. In FIG. 2, an ME 12 is arranged on the support device 20 in preparation for insertion into the MH 11 in the direction of the arrow. The dashed lines inside the ME 12 indicate the extent of the permeate channel 14.

The support device 20 comprises an engagement portion 21, which is configured to detachably engage the end portion 11A, and a platform portion 22 that projects from an end section 32. At the end section 32 of the support device, the engagement portion 21 is arranged and is configured to support the ME 12 during its loading/unloading into the cavity through the opening 11C. It is realized that loading or insertion of MEs 12 into the MH 11, as well as unloading or extraction of MEs 12 from the MH 11, may be greatly facilitated by the supporting function of device 20. The static load on the user during loading/unloading may be reduced, thereby mitigating the risk of injuries and improving OHS (Occupational Health and Safety) at the workplace. Further, the risk of an ME 12 being dropped to the floor is reduced.

In one embodiment, the support device 20 is configured to align the ME 12 with the opening 11C during loading and/or unloading, improving usability by facilitating insertion and extraction of the ME 12. In the example of FIG. 2, the platform 22 is level with the bottom of opening 11C to ensure a smooth transition from the support device 20 to the MH 11.

In one embodiment, as shown in FIG. 2, the support device 20 includes an elongate, essentially horizontal support surface 24 on the platform portion 22 for the ME 12 when the engagement portion 21 is engaged with the end portion 11A. This design allows the ME 12 to align with the general horizontal orientation of the MH 11 when placed on the platform portion 22, facilitating loading and unloading of the MEs 12.

In another embodiment, the support device 20 forms a cantilevered support structure on the MH 11 when the engagement portion 21 is engaged with the end portion 11A. As used herein, "cantilevered" refers to an overhanging or protruding structure that does not require external support. FIG. 2 illustrates an example of this structure. When subjected to structural load, the platform 22 transfers the load to the engagement portion 21, which is thereby pressed against the end portion 11A. This configuration is straightforward for service personnel to handle and mount onto the MH 11.

In one embodiment, the support device 20 is configured to be self-supporting when the engagement portion 21 is engaged with the end portion 11A. "Self-supporting," as used here, means that once positioned and engaged, the support device 20 can perform its supporting function without needing further assistance. FIG. 2 illustrates such an embodiment.

In another embodiment, the engagement portion 21 is configured to grip and connect securely to a radial protrusion 11B on the end portion 11A. FIG. 2 illustrates this configuration, where the engagement portion 21 extends around the end section 32. In cross-section, the engagement portion 21 may have a U-shaped profile, allowing it to engage the radial protrusion 11B of the end portion 11A in a hook-like manner. The engagement portion 21 wraps around the end section 32, which is equipped with an end flange portion 28 that extends externally around the end section 32. The end section 32 also includes an abutment surface 36, designed to press against a front surface 11D of the end portion 11A. When the support device 20 is secured to the MH 11, the end flange portion 28, with its abutment surface 36, is positioned against the front surface of the radial protrusion 11B, creating a secure engagement.

During use, an ME 12 is positioned on the support surface 24 of the support device 20 and pushed along this surface, through the end section 32, and into the MH 11. Within the MH 11, the ME 12 slides along the bottom surface 11E of the MH 11. The end section 32 may have a cylindrical shape with an imaginary center axis 47 running through it. The inner diameter of the end section 32 is approximately equal to the inner diameter of the MH 11, allowing the imaginary center axis 47 to align through both the end section 32 and MH 11.

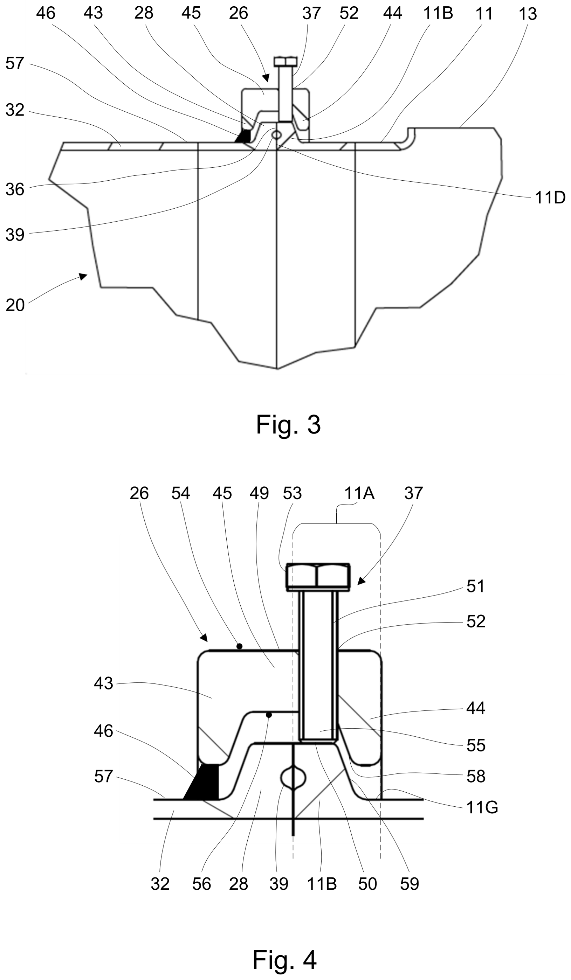

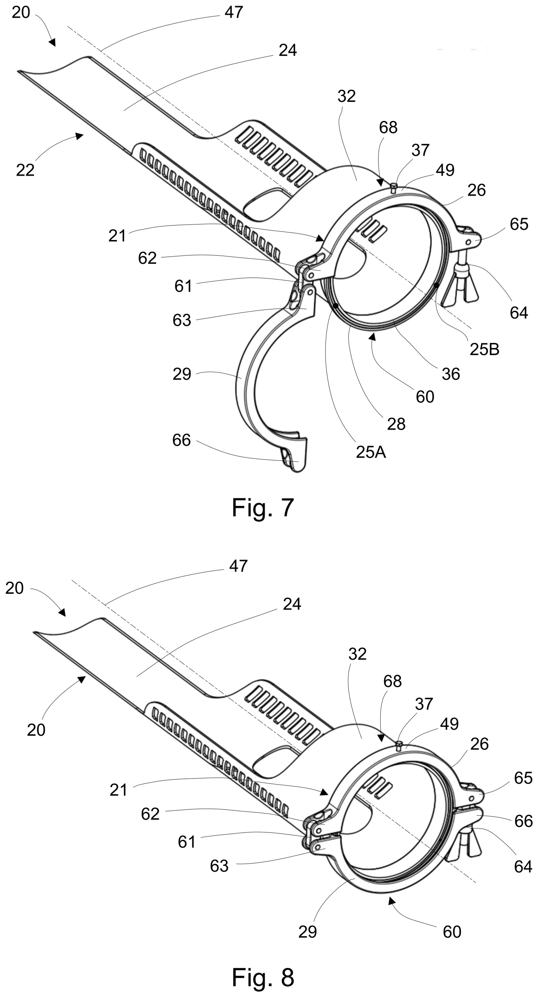

The end section 32 has an upper surface 57 and a lower surface 67. The engagement portion 21 includes a first clamp part 26 and a second clamp part 29. The first clamp part 26 is attached to the upper surface 57, typically by a weld connection 46 (see FIG. 3 and 4) but potentially by other means, such as adhesive bonding. The second clamp part 29 is pivotably connected to the first clamp part 26 and can be releasably secured to the lower surface 67, locking against the first clamp part 26 using a tensioning device 64 (see FIG. 7 and 8). When the support device 20 is connected to the MH 11, the second clamp part 29 clamps onto the lower side 11H of the end portion 11A of the MH 11.

To ensure smooth movement of the ME 12, it is essential that the support surface 24 of the platform portion 22 and the bottom surface 11E of the MH 11 are aligned. Misalignment could create an edge between the support surface 24 and the bottom surface 11E, potentially damaging the ME 12 during its transition from the support surface 24 to the bottom surface 11E. To address this, an adjustment element 37, in the form of a screw 51 (see FIG. 4), is arranged with the first clamp part 26. This adjustment element 37 allows fine-tuning of the vertical positioning of the lower surface 67 relative to the MH 11, specifically the bottom surface 11E, to achieve proper leveling.

FIG. 3 illustrates a cross-sectional view of a portion of the support device 20 connected to the MH 11. The end section 32 of the support device 20, with its end flange portion 28, is positioned against the radial protrusion 11B of the MH 11. The end flange portion 28 includes an abutment surface 36, which is designed to press against a front surface 11D of the radial protrusion 11B. A slot 39 is arranged within this surface. The upper surface 57 of the end section 32 and the first clamp part 26 of the engagement portion 21 are joined by a weld connection 46.

As shown in FIG. 3, the engagement portion 21 has a U-shaped cross-section, consisting of an inner flange 43, an outer flange 44, and a waist section 45 between them. The inner flange 43 is attached to the upper surface 57 via the weld connection 46. The first clamp part 26 has an opening 52 through which the adjustment element 37, such as a threaded screw 51 (see FIG. 4), is positioned, allowing it to be adjusted relative to the first clamp part 26.

FIG. 4 provides a cross-sectional view of the first clamp part 26, which connects the end section 32 of the support device 20 to the end portion 11A of the MH 11. The inner flange 43 of the first clamp part 26 is welded to the upper surface 57 of the end section 32 using a weld connection 46. Multiple welds may be employed to secure the first clamp part 26 firmly to the end section 32. The first clamp part 26 is attached to the upper half 68 of the end section 32 (see FIG. 7 and 8), ensuring a stable connection.

The first clamp part 26 features an opening 52, which may be internally threaded and is located at the central top portion 49 of the first clamp part 26 (see FIG. 7 and 8). Through this opening 52, the adjustment element 37, such as a threaded screw 51, is positioned. The screw 51 has a head 53 on the outside 54 of the first clamp part 26. The opposite side is the inside 56, which faces the end flange portion 28 of the end section 32. On the inside 56, the tip of the screw 51 is located. FIG. 4 includes reference points to indicate the outside 54 and inside 56 of the first clamp part 26.

The opening 52 passes through the waist portion 45 of the first clamp part 26, positioned between the middle part of the first clamp part and the outer flange 44. When the tip 55 of the screw 51 is adjusted towards the inside 54, it does not contact the end flange 28, as the opening 52 is situated over the radial protrusion 11B of the MH 11 when the support device 20 is mounted on the MH 11. The tip 55 includes an underside, termed the membrane housing abutment surface 50, which faces the radial protrusion 11B. The position of the screw 51 and its tip 55 determines the vertical alignment of the radial protrusion 11B relative to the end flange 28.

The outer flange 44 of the first clamp part 26 includes a first inclined engagement surface 58, while the radial protrusion 11B features a second inclined engagement surface 59 extending from the upper side 11G of the end portion 11A. When the support device 20 is connected to the MH 11, the first and second inclined engagement surfaces 58 and 59 are aligned to engage securely with each other.

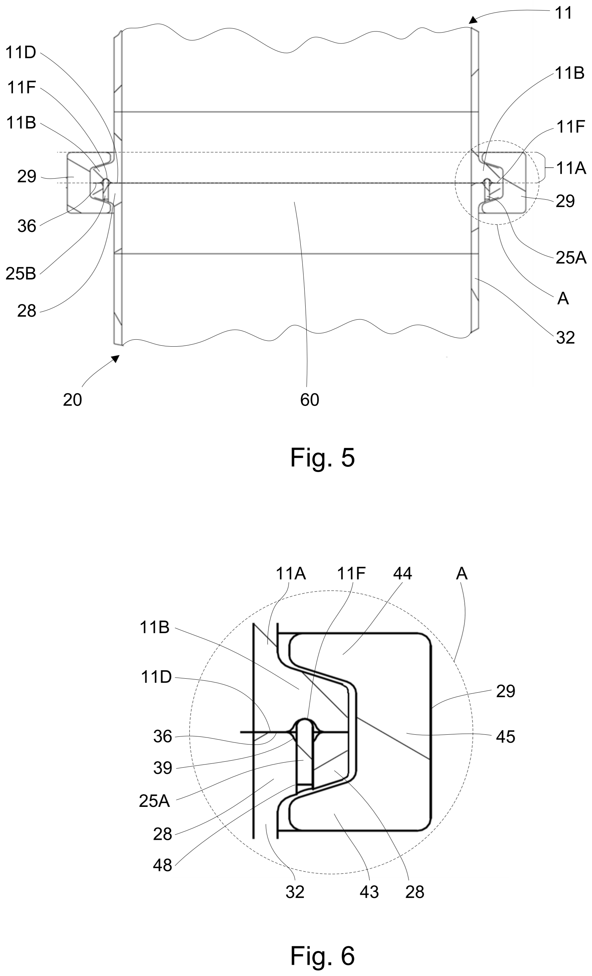

FIG. 5 illustrates a cross-sectional view of the lower half of the connection between the end section 32 of the support device 20 and the end portion 11A of the MH 11. The second clamp part 29 has a generally half-circle shape and, in FIG. 5, is shown in the connected state, securing the end flange 28 of the end section 32 to the radial protrusion 11B of the end portion 11A, thereby joining the end section 32 to the end portion 11A.

In the lower half 60 of the end flange 28, a first and second guide pin, 25A and 25B respectively, are arranged. These guide pins 25A and 25B are located in the lower half 60 of the end flange portion 28 and are spaced apart by at least one-quarter of the circumference of the lower half 60. In some embodiments, they are spaced one-third of the circumference apart. The guide pins 25A and 25B extend from the abutment surface 36 of the end flange portion 28 and are designed to align with corresponding receiving recesses 11F on the front surface 11D of the radial protrusion 11B. The recesses 11F are spaced apart by the same circumferential distance as the guide pins 25A and 25B. The guide pins fit into the respective recesses 11F to ensure the correct orientation of the support device relative to the MH 11. In FIG. 5, a part of the structure is indicated by a circular dashed line labeled reference A, which is detailed in FIG. 6.

FIG. 6 presents an enlarged cross-sectional view A of the connection between the end section 32 and the end portion 11A as shown in FIG. 5. FIG. 6 displays the first guide pin 25A. It is understood that the second guide pin 25B, although not shown, has similar characteristics and functions to the first guide pin 25A. The first guide pin 25A is positioned within a pin hole 48 extending through the end flange portion 28. The pin hole 48 is aligned parallel to the imaginary center axis 47, which runs through the end section 32, having a cylindrical shape.

The first guide pin 25A extends from the abutment surface 36 of the end flange portion 28 through a slot 39. This slot 39 is positioned in the abutment surface 36 and extends around the entire circumference of the abutment surface 36, forming a circular slot around the center axis 47. A corresponding slot is located on the front surface 11D of the radial protrusion 11B. This slot is configured to work with a sealing ring placed within it. When the ME 12 is positioned inside the MH 11, an end cap 11' is used to close the opening 11C, and the sealing ring within the slot on the front surface 11D enhances the seal between the end cap 11' and the MH 11.

When the support device 20 is positioned against the MH 11, the end cap 11' is removed, and a sealing ring may be arranged in the slot to improve the positioning and connectivity between the end flange portion 28 and the radial protrusion 11B. Along the slot in the front surface 11D of the radial protrusion, a receiving recess 11F is provided. This receiving recess 11F is designed to accommodate part of the guide pins 25A and 25B. The receiving recess 11F has a diameter substantially larger than the diameter of the guide pins 25A and 25B.

During the vertical adjustment of the flange portion 28 of the support device 20 relative to the radial protrusion 11B of the MH 11, when the adjustment element 37 is screwed against the radial protrusion 11B (see FIG. 4), the guide pins can move vertically within the receiving recess 11F due to the larger inner area of the recess compared to the diameter of the guide pins.

FIGS. 7 and 8 illustrate the support device 20. In FIG. 7, the support device 20 is shown in an unlocked state. In FIG. 8, the support device is shown in a locked state, where the first clamp part 26 and the second clamp part 29 of the engagement portion 21 are connected. The support device 20 includes a platform portion 22 with a support surface 24 configured to hold an ME 12 for loading into the MH 11. The ME 12 is designed to slide along the support surface 24 into the MH 11.

The support device 20 has a free end and an end section 32 configured to be positioned against the MH 11. The end section 32 has a cylindrical shape, extending along the imaginary center axis 47 of the support device 20. This cylindrical design provides a firm and stable structure, enabling the support device 20 to withstand bending when supporting an ME 12, thus eliminating the need for additional supporting bars along the length of the support device 20.

At the end section 32, the engagement portion 21 is located. The engagement portion 21 consists of the first clamp part 26 and the second clamp part 29. The first clamp part 26 is fixedly connected to the upper half 68 of the end section 32 and has a half-circle shape with a first end 62 and a second end 65. Similarly, the second clamp part 29 has a half-circle shape with corresponding first and second ends, 63 and 66, respectively. A joint 61 connects the first end 62 of the first clamp part 26 to the first end 63 of the second clamp part 29, allowing the second clamp part 29 to pivot relative to the first clamp part 26.

The second end 65 of the first clamp part 26 is designed to interface with the second end 66 of the second clamp part 29 using a tension device 64. The tension device 64 is pivotably connected to the second end 65 of the first clamp part 26 and is designed to secure the second end 66 of the second clamp part 29. Tension is applied by tightening a wing nut on the tension device. When the wing nut is tightened, the first and second clamp parts 26 and 29 are pressed together, securely holding the end flange portion 28 of the end section 32 against the radial protrusion 11B of the MH 11 (see FIG. 8).

In the lower half 60 of the end flange portion 28, the first guiding pin 25A and the second guiding pin 25B are located (see FIG. 7). When the support device 20 is connected to the MH 11, these guide pins 25A and 25B fit into corresponding receiving recesses 11F in the front surface 11D of the MH 11, ensuring the correct rotational alignment of the support device 20 with respect to the MH 11.

At the central top portion 49 of the first clamp part 26, the adjustment element 37 is positioned. The adjustment element 37 can be screwed downward or upward through the first clamp part to adjust the vertical position of the support device 20 relative to the MH 11. When the adjustment element is screwed against the radial protrusion 11B, it adjusts the position of the support device 20, ensuring that the support surface 24 of the support device 20 and the bottom surface 11E of the MH 11 are level. This leveling allows the ME 12 to slide from the support device 20 into the MH 11 without risk of damage, which could otherwise occur if there were an edge between the support surface 24 and the bottom surface 11E.

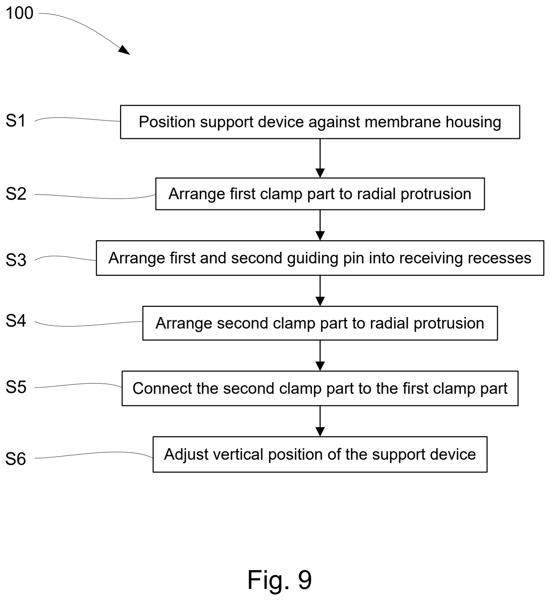

FIG. 9 presents a flowchart 100 illustrating a method for assembling a support device onto a filtration unit for inserting one or more membrane elements into the filtration unit.

In step S1, the support device is positioned against an MH 11 of a filtration unit 10.

In step S2, the support device 20 is arranged with the first clamp part 26 positioned against a radial protrusion 11B of the MH 11.

In step S3, the first and second guide pins 25A and 25B on the support device 20 are inserted into corresponding receiving recesses in the MH 11.

In step S4, the second clamp part 29 is pivoted into a locking position, engaging with the radial protrusion 11B. The radial protrusion 11B around the opening 11C of the MH 11 extends across both the upper and lower halves of the MH 11. In this connection, the first clamp part 26 engages with the radial protrusion 11B on the upper half of the MH 11, while the second clamp part 29 engages with the radial protrusion 11B on the lower half.

In step S5, the second clamp part 29 is locked against the first clamp part 26, securing the support device 20 to the MH 11.

In step S6, the vertical position of the support device relative to the MH 11 is adjusted.

## Claims

1. A support device (20) for use with a membrane filtration apparatus (1) comprising an elongate membrane housing (11), said support device (20) being configured to support a membrane element (12) during loading and/or unloading of the membrane element (12) through an opening (11C) in an end portion (11A) of the membrane housing (11), said support device (20) comprising:
an end flange portion (28) which is configured to abut the end portion (11A) of the membrane housing (11);
a platform portion (22) that projects from the end flange portion (28) and is configured to support the membrane element (12) during said loading and/or unloading through the opening (11C); and
an engagement portion (21) having a first clamp part (26) and a second clamp part (29), wherein
the first clamp part (26) is fixedly connected to the end flange portion (28), and arranged to be hooked to an upper side (11G) of the end portion (11A) of the membrane housing (11),
the second clamp part (29) is movably connected to the engagement portion (21), and arranged to be clamped against a lower side (11H) of the end portion (11A) of the membrane housing (11), and
the first clamp part (26) comprises an adjustment element (37) configured to cooperate with the upper side (11G) of the end portion (11A) of the membrane housing (11), to adjust a vertical position of a support surface (24) with respect to the opening (11C) in the end portion (11A) of the membrane housing (11).

2. A support device (20) according to claim 1, wherein the adjustment element (37) is arranged at a central top portion (49) of the first clamp part (26).

3. A support device (20) according to any preceding claim, wherein the adjustment element (37) is movable relative to the first clamp part (26), such that a membrane housing abutment surface (50) of the adjustment element (37) is movable relative to the first clamp part (26).

4. A support device (20) according to any preceding claim, wherein the adjustment element (37) has the form of a threaded screw (51) that extends through a threaded opening (52) in the first clamp part (26), with the head (53) of the screw (51) being located on an outside (54) of the first clamp part (26), and the tip (55) of the screw (51) being located on the inside (56) of the first clamp part (26).

5. A support device (20) according to any preceding claim, wherein the first clamp part (26) is connected with a weld (46) to an upper surface (57) of the end section (32) of the support device (20).

6. A support device (20) according to any preceding claim, wherein the first clamp part (26) comprises a first inclined engagement surface (58) that is arranged to abut a second inclined engagement surface (59) of the upper side (11G) of the end portion (11A) of the membrane housing (11).

7. A support device (20) according to claim 6, wherein the inclined engagement surface (58) has a semi-circular extension around the end flange portion (28).

8. A support device (20) according to claim 6, wherein the inclined engagement surface (58) is parallel to the second inclined engagement surface (59).

9. A support device (20) according to claim 6, wherein the inclined engagement surface (58) extends from an inside (56) of the first clamp part (26) to an edge surface of an outer flange (44) of the first clamp part (26), the inclined engagement surface (58) being shorter than the second inclined engagement surface (59), the second inclined engagement surface (59) extending from an outer surface of a radial protrusion (11B) of the membrane housing (11) to the upper side (11G) of the end portion (11A).

10. A support device (20) according to any preceding claim, wherein the end flange portion (28) comprises an abutment surface (36) configured to face and abut the end portion (11A) of the membrane housing (11).

11. A support device (20) according to claim 10, wherein the engagement portion (21) comprises at least one guiding pin (25A, 25B) which extends out from the abutment surface (36), the pin (25A, 25B) being configured to protrude into a slot (39) in the end portion (11A) of the membrane housing (11) when the end flange portion (28) abuts the end portion (11A) of the membrane housing (11).

12. A support device (20) according to claim 11, wherein the end flange portion (28) comprises a first guiding pin (25A) and a second guiding pin (25B) extending out from the abutment surface (36), wherein the first guiding pin (25A) and the second guiding pin (25B) are located in a lower half (60) of the end flange portion (28), and spaced apart by at least one quarter of the circumference of the lower half (60).

13. A support device (20) according to claim 11, wherein the guiding pin (25A, 25B) is arranged through a pin hole (48) that extends through the end flange portion (28).

14. A support device (20) according to any preceding claim, wherein the engagement portion (21) comprises an articulated joint (61) that connects first ends (62, 63) of the first and second clamp parts (26, 29) to each other, and a tensioning device (64) arranged opposite the articulated joint (61), for connecting second ends (65, 66) of the first and second clamp parts (26, 29) to each other and tightening the first and second clamp parts (26, 29) on the end portion (11A) of the membrane housing (11).

15. A method for assembling a support device (20) according to any preceding claim against an elongate membrane housing (11), the method comprising:
positioning (S1) the support device (20) against a membrane housing (11);
arranging (S2) a first clamp part (26) against a radial protrusion (11B) of the membrane housing (11);
arranging (S3) a first and second guiding pin (25A, 25B) in an end flange portion (28) of the support device (20) into a respective receiving recess (11F) in an end portion (11A) of the membrane housing (11);
arranging (S4) a second clamp part (29) against the radial protrusion (11B);
connecting (S2) the second clamp part (29) to the first clamp part (26);
adjusting (S6) the vertical position of the support device (20) with respect to the elongate membrane housing (11).
